# EUROPÄISCHE PATENTSCHRIFT

(11) **EP 3 122 213 B1**
(45) Veröffentlichungstag und Bekanntmachung des Hinweises auf die Patenterteilung: **28.08.2019**
(21) Anmeldenummer: 15703942.1
(22) Anmeldetag: 03.02.2015
(51) Int. Cl.: A47J 31/36

(54) **REINIGUNGSKAPSEL FÜR EIN EXTRAKTIONSGERÄT**
CLEANING CAPSULE FOR AN EXTRACTION APPLIANCE
CAPSULE NETTOYANTE POUR APPAREIL D'EXTRACTION

(30) Priorität: 26.03.2014 DE 102014104210
(43) Veröffentlichungstag der Anmeldung: 01.02.2017
(73) Patentinhaber: Tchibo (Schweiz) AG, 8304 Wallisellen (CH)
(72) Erfinder: DEUBER, Louis, CH-8805 Richterswil (CH); BALKAU, Werner, CH-8762 Schwändi (CH)
(74) Vertreter: Frei Patent Attorneys
(86) Internationale Anmeldenummer: PCT/EP2015/052138
(87) Internationale Veröffentlichungsnummer: WO 2015/144347

(56) Entgegenhaltungen:
- EP-A1- 2 284 102
- WO-A1-2012/072767
- WO-A1-2013/166615
- WO-A2-2013/188246
- DE-A1-102010 027 523
- DE-A1-102012 010 394

## Beschreibung

Die Erfindung betrifft eine ein Reinigungs- und/oder Entkalkungsmittel enthaltende Reinigungskapsel für ein Extraktionsgerät, welches zur Zubereitung eines Brüherzeugnisses aus einem in einer Portionskapsel enthaltenden Extraktionsgut vorgesehen ist und welches eine Injektionseinrichtung zum Einleiten einer Brühflüssigkeit in die Portionskapsel und eine Extraktionseinrichtung zum Ausleiten eines Extraktionsprodukts aus der Portionskapsel umfasst, wobei die Injektionseinrichtung und die Extraktionseinrichtung eine Brühkammer definieren, in welche die Portionskapsel einsetzbar ist, und wobei die Injektionseinrichtung wenigstens einen Injektionsdorn und die Extraktionseinrichtung wenigstens einen Extraktionsdorn zum Anstechen der in die Brühkammer eingesetzten Portionskapsel aufweist.

Solche Kapseln und Extraktionsgeräte sind aus den Dokumenten WO2013/166615 und WO2013/188246 bekannt und werden insbesondere zur Zubereitung von Kaffee verwendet wird. Dabei ist es ein bekanntes Problem, dass Kaffeerückstände in der Brühkammer verbleiben, welche nach einer gewissen Anzahl von Brühvorgängen dazu führen, dass Spuren von ranzigem Öl in den Kaffee gelangen, was sich nachteilig auf den Geschmack des Kaffees auswirkt. Diesem Problem kann man zwar durch regelmäßiges Durchspülen entgegenwirken, beispielsweise indem man einen Brühvorgang ohne Kapsel durchführt, eventuell mit Reinigungslösung, die man zuvor in den Wassertank gegeben hat, und für für den Gastronomiebetrieb vorgesehene professionelle Maschinen gibt es aufwändige Reinigungsprogramme. Bei einem einfachen Durchspülen erreicht man aber nie einen oberen Bereich der Brühkammer, sondern es wird immer nur ein unterer Bereich der Brühkammer gereinigt.

Aufgabe der Erfindung ist es, eine Lösung zur Verfügung zu stellen, die auf besonders einfache und kostengünstige Weise eine Reinigung der gesamten Brühkammer eines für die Verwendung von Portionskapseln vorgesehenen Extraktionsgeräts ermöglicht.

Die Aufgabe wird durch eine Reinigungskapsel mit den Merkmalen des Anspruchs 1 und insbesondere dadurch gelöst, dass die Reinigungskapsel in die Brühkammer einsetzbar und derart ausgebildet ist, dass durch die Injektionseinrichtung injektionsseitig in die Reinigungskapsel eingeleitete Brühflüssigkeit auch injektionsseitig wieder aus der Reinigungskapsel austritt und außen an der Reinigungskapsel vorbei zu der Extraktionseinrichtung strömt.

Der Erfindung liegt der allgemeine Gedanke zugrunde, zu verhindern, dass - wie bei Extraktionsgut enthaltenden Portionskapseln üblich - die injektionsseitig in die Reinigungskapsel eingeleitete Brühflüssigkeit extraktionsseitig aus dieser austreten kann, indem der "normale" Kapselausgang gewissermaßen verschlossen wird. Hierdurch wird die in die Reinigungskapsel injizierte Brühflüssigkeit gezwungen, nach Vermischung mit dem in der Reinigungskapsel enthaltenden Reinigungs- und/oder Entkalkungsmittel als Reinigungs- bzw. Entkalkungsflüssigkeit injektionsseitig wieder aus der Reinigungskapsel auszutreten, von wo aus sie dann um die Reinigungskapsel herum zu der Extraktionseinrichtung geleitet wird. Hierbei wird die Reinigungskapsel vollständig umspült, so dass nicht nur ein unterer Teil, sondern insbesondere auch ein oberer Teil der Brühkammer und somit die Brühkammer insgesamt wirksam gereinigt wird.

Zur Durchführung eines solchen Reinigungsvorgangs braucht lediglich die Reinigungskapsel in die Brühkammer eingesetzt und ein Brühvorgang gestartet zu werden. Die Reinigung der Brühkammer lässt sich daher auf besonders einfache und zeitsparende Weise durchführen.

Es versteht sich, dass die Reinigungskapsel nicht nur zur Reinigung der Brühkammer, sondern grundsätzlich auch zur Reinigung und/oder Entkalkung anderer Teile des Extraktionsgeräts verwendet werden kann. Hierzu ist es beispielsweise denkbar, die Reinigungs- und/oder Entkalkungsflüssigkeit aus der Brühkammer über eine Bypassleitung in den Brühflüssigkeitskreislauf zurückzuführen, beispielsweise direkt in eine Heizeinrichtung des Extraktionsgeräts. Idealerweise wird die Reinigungs- bzw. Entkalkungsflüssigkeit dabei stromabwärts von einem Wassertank des Extraktionsgeräts in den Brühflüssigkeitskreislauf eingeleitet, damit der Wassertank nicht mit Entkalkungs- bzw. Reinigungsmittel kontaminiert wird, sondern lediglich die Brühflüssigkeitsleitungen zwischen der Heizeinrichtung und der Brühkammer gereinigt bzw. entkalkt werden.

Vorteilhafte Ausbildungen der Erfindung sind den Unteransprüchen, der Beschreibung und der Zeichnung zu entnehmen.

Um zu verhindern, dass die in die Reinigungskapsel injizierte Brühflüssigkeit extraktionsseitig aus der Reinigungskapsel austreten kann, weist die Reinigungskapsel ein Mittel auf, das ein extraktionsseitiges Anstechen der Reinigungskapsel in der Brühkammer verhindert. Beispielsweise umfasst das Mittel mindestens eine an den wenigstens einen Extraktionsdorn angepasste Vertiefung einer extraktionsseitigen Wand der Reinigungskapsel. Dabei kann - unabhängig von der Anzahl der Extraktionsdorne - die extraktionsseitige Kapselwand insgesamt soweit in Richtung Kapselinneres zurückversetzt sein, dass die extraktionsseitige Kapselwand der in die Brühkammer eingesetzten Reinigungskapsel nicht mit dem wenigstens einen Extraktionsdorn in Kontakt kommt und somit nicht angestochen wird. Alternativ ist es aber auch möglich, für jeden der Extraktionsdorne eine eigene Vertiefung oder konkave Auswölbung vorzusehen, die ausreichend weit und tief ausgebildet ist, um ein Anstechen der extraktionsseitigen Kapselwand durch den zugeordneten Extraktionsdorn zu verhindern.

Gemäß einer weiteren Ausführungsform weist ein umlaufender Kragen der Reinigungskapsel wenigstens eine Durchgangsöffnung für außen an der Reinigungskapsel vorbeiströmende Flüssigkeit auf. Der Kragen dient der Halterung der Reinigungskapsel in der Brühkammer und greift zu diesem Zweck in Nutabschnitte ein, die in die Brühkammer begrenzenden Wänden des Extraktionsgeräts vorgesehen sind. Das Zusammenwirken von Kragen und Nutabschnitten führt zu einer gewissen Abdichtung eines injektionsseitigen Teils der Brühkammer gegenüber einem extraktionsseitigen Teil der Brühkammer. Die in dem Kragen vorgesehene Durchgangsöffnung sorgt dabei dafür, dass die um die Reinigungskapsel herum geleitete Reinigungsflüssigkeit trotzdem aus dem injektionsseitigen Teil der Brühkammer in den extraktionsseitigen Teil der Brühkammer gelangen und durch die Extraktionseinrichtung ausgeleitet werden kann.

Um über den gesamten Umfang der Reinigungskapsel herum eine möglichst gleichmäßige Strömung der Reinigungsflüssigkeit durch die Brühkammer zu erreichen, sind bevorzugt eine Vielzahl von Durchgangsöffnungen über die Länge des Kragens im Wesentlichen gleich verteilt angeordnet. Eine solche Anordnung von Durchgangsöffnungen eignet sich sowohl für den Fall, dass die Reinigungskapsel eine kegelförmige oder zylindrische Grundform aufweist, als auch für den Fall, dass die Reinigungskapsel eine im Wesentlichen kubische oder quaderförmige Grundform aufweist. Außerdem hat sie den Vorteil, dass die Reinigungskapsel mit beliebiger Orientierung in die Brühkammer eingesetzt werden kann, d.h. es kommt nicht darauf an, dass eine bestimmte Seite der in die Brühkammer eingesetzten Reinigungskapsel nach oben zeigt.

Ist die Reinigungskapsel im Wesentlichen kubisch oder quaderförmig ausgebildet, kann der umlaufende Kragen alternativ nur an einer Seite der Reinigungskapsel eine Durchgangsöffnung für außen an der Reinigungskapsel vorbeiströmende Reinigungsflüssigkeit aufweisen, welche insbesondere schlitzförmig ausgebildet ist. Für ein optimales Reinigungsergebnis sollte diese Reinigungskapsel so in die Brühkammer eingesetzt werden, dass die Durchgangsöffnung oben liegt, damit die um die Reinigungskapsel herum geleitete Reinigungsflüssigkeit nur an der Oberseite der Reinigungskapsel aus dem injektionsseitigen Teil der Brühkammer in den extraktionsseitigen Teil der Brühkammer übergehen kann und somit sichergestellt ist, dass auch der obere Teil der Brühkammer von Reinigungsflüssigkeit durchspült und gereinigt wird.

Alternativ oder zusätzlich zu einer "oben liegenden" Durchgangsöffnung kann der umlaufende Kragen in seinen Eckbereichen jeweils eine Durchgangsöffnung für außen an der Reinigungskapsel vorbeiströmende Flüssigkeit aufweisen.

Gemäß einer weiteren Ausführungsform ist mindestens eine Mantelwand der Reinigungskapsel mit wenigstens einer außenliegenden Rippe versehen, die sich insbesondere rechtwinklig zu der extraktionsseitigen Kapselwand erstreckt. Die Rippe bewirkt zum einen eine gewisse Versteifung der Reinigungskapsel und zum anderen eine gewisse Kanalisierung der außen an der Reinigungskapsel vorbeiströmenden Reinigungsflüssigkeit. Des Weiteren ist in der Brühkammer üblicherweise eine umlaufende Dichtlippe vorgesehen, welche eine in die Brühkammer eingesetzte Portionskapsel während eines Brühvorgangs umlaufend abdichtet, um sicherzustellen, dass durch die Injektionseinrichtung zugeführte Brühflüssigkeit nicht außen an der Portionskapsel vorbeiströmen und das Extraktionsprodukt, beispielsweise den Kaffee, verdünnen kann. Um zu vermeiden, dass eine vollständige Durchspülung der Brühkammer mit Reinigungsflüssigkeit durch eine Abdichtung der Dichtlippe gegen die Reinigungskapsel verhindert wird, sorgt die Rippe dafür, dass die Dichtlippe bereichsweise geringfügig angehoben wird, wodurch ein Durchgang zwischen Dichtlippe und Reinigungskapsel geschaffen wird, durch den die außen an der Reinigungskapsel vorbeiströmende Reinigungsflüssigkeit von dem injektionsseitigen Teil der Brühkammer in den extraktionsseitigen Teil der Brühkammer gelangen kann. Ist der Durchgang zwischen Dichtlippe und Reinigungskapsel ausreichend klein, baut sich injektionsseitig ein Druck in der Reinigungsflüssigkeit auf, der sicherstellt, dass die Dichtlippe injektionsseitig wirksam gereinigt wird.

Gemäß einer Ausführungsform sind eine Vielzahl von Rippen über die Mantelwand der Reinigungskapsel im Wesentlichen gleichverteilt angeordnet. Insbesondere wenn die Reinigungskapsel eine kubische oder quaderförmige Grundform aufweist, ist es alternativ aber auch möglich, Rippen nur in Eckbereichen vorzusehen, in welchen plane Mantelwände der Reinigungskapsel aneinander angrenzen. Dies ist vor allem dann vorteilhaft, wenn Durchgangsöffnungen für außen an der Reinigungskapsel vorbeiströmende Flüssigkeit in den Eckbereichen des umlaufenden Kragens vorgesehen sind.

Die Reinigungskapsel lässt sich, insbesondere durch Tiefziehen oder Spritzgießen, besonders einfach herstellen, wenn die zumindest eine außenliegende Rippe an den umlaufenden Kragen angrenzt. Zur Erhöhung einer für das Auswerfen der Reinigungskapsel aus der Brühkammer erforderlichen Flexibilität des umlaufenden Kragens ist es jedoch denkbar, die Rippe in einem Abstand zu dem umlaufenden Kragen enden zu lassen.

Eine besonders wirtschaftliche Herstellung der Reinigungskapsel ist ferner möglich, wenn sie, insbesondere durch Tiefziehen oder Spritzgießen, als fünfseitiger, extraktionsseitig offener Polyeder-Grundkörper hergestellt ist, der nach Befüllung mit dem Reinigungs- und/oder Entkalkungsmittel durch eine Siegelfolie verschlossen wird, welche z.B. aus Polypropylen, Aluminium, Fließpapier oder Filterpapier gebildet sein kann und/oder eine Stärke im Bereich von 0,02 mm bis 0,2 mm aufweisen kann.

Weiterer Gegenstand der Erfindung ist außerdem ein System zur Zubereitung eines Brüherzeugnisses mit einem Extraktionsgerät und einer Reinigungskapsel der voranstehend beschriebenen Art.

Nachfolgend wird die Erfindung rein beispielhaft anhand möglicher Ausführungsformen unter Bezugnahme auf die beigefügte Zeichnung beschrieben. Es zeigen:
- Fig. 1: perspektivische Ansichten einer ersten Ausführungsform einer erfindungsgemäßen Reinigungskapsel;
- Fig. 2: eine Schnittansicht eines Brühmoduls eines Extraktionsgeräts, in welches die Reinigungskapsel von Fig. 1 eingesetzt ist;
- Fig. 3: perspektivische Ansichten einer zweiten Ausführungsform einer erfindungsgemäßen Reinigungskapsel;
- Fig. 4: eine Schnittansicht eines Brühmoduls eines Extraktionsgeräts, in welches die Reinigungskapsel von Fig. 3 eingesetzt ist;
- Fig. 5: perspektivische Ansichten einer dritten Ausführungsform einer erfindungsgemäßen Reinigungskapsel;
- Fig. 6: eine Schnittansicht eines Brühmoduls eines Extraktionsgeräts, in welches die Reinigungskapsel von Fig. 5 eingesetzt ist;
- Fig. 7: perspektivische Ansichten einer alternativen Ausführungsform einer Reinigungskapsel;
- Fig. 8: eine Schnittansicht eines Brühmoduls eines Extraktionsgeräts, in welches die Reinigungskapsel von Fig. 7 eingesetzt ist.

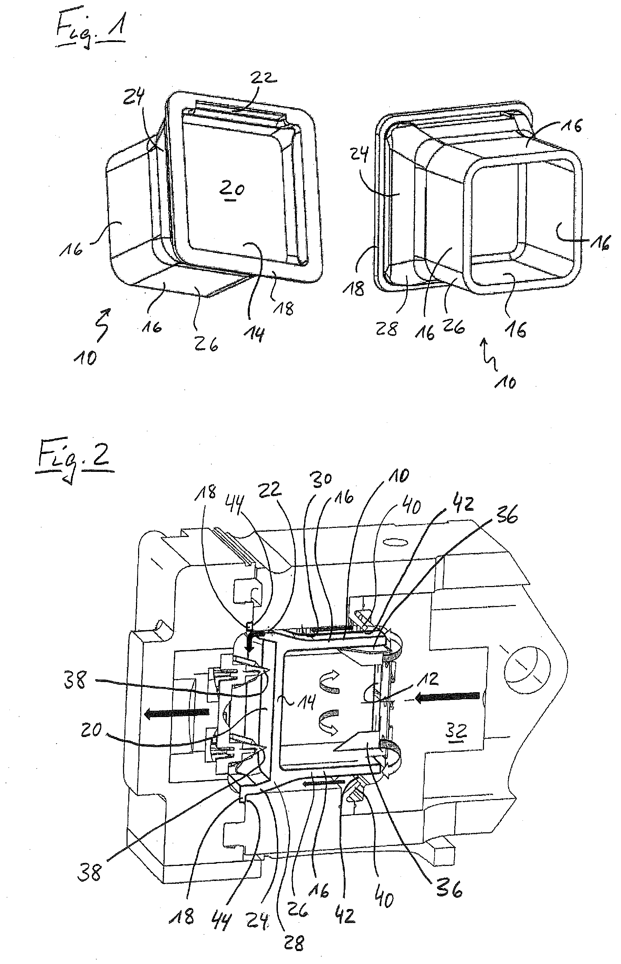

In Fig. 1 ist eine erste Ausführungsform einer Reinigungskapsel dargestellt, die zur Reinigung und/oder Entkalkung eines Extraktionsgeräts dient, welches zur Zubereitung eines Brüherzeugnisses, z.B. Kaffee, aus einem in einer Portionskapsel enthaltenen Extraktionsgut, z.B. Kaffeepulver, vorgesehen ist.

Die Reinigungskapsel 10 besitzt eine annähernd quaderförmige Gestalt und weist eine in den Figuren transparent dargestellte injektionsseitige Wand 12, eine dieser gegenüberliegende extraktionsseitige Wand 14 und vier Mantelwände 16 auf, welche die injektionsseitige Wand 12 und die extraktionsseitige Wand 14 miteinander verbinden. Die Wände 12 bis 16 definieren einen Innenraum der Reinigungskapsel 10, in welchem ein Reinigungs- und/oder Entkalkungsmittel enthalten ist.

Gemäß dem vorliegenden Ausführungsbeispiel wird die Reinigungskapsel 10, beispielsweise mittels eines Tiefzieh- oder Spritzgussverfahrens, als fünfseitiger, extraktionsseitig offener Polyeder-Grundkörper aus einem Kunststoffmaterial hergestellt, welcher nach Befüllung mit dem Reinigungs- und/oder Entkalkungsmittel durch eine Siegelfolie verschlossen wird, welche die injektionsseitige Wand 12 bildet. Die Siegelfolie kann beispielsweise aus Polypropylen, Aluminium, Fließpapier oder Filterpapier gebildet sein und eine Stärke im Bereich von 0,02 mm bis 0,2 mm aufweisen.

Die extraktionsseitige Wand 14 ist von einem umlaufenden Kragen 18 umgeben, der sowohl seitlich als auch extraktionsseitig gegenüber der extraktionsseitigen Wand 14 vorspringt. Die extraktionsseitige Wand 14 ist mit anderen Worten gegenüber dem umlaufenden Kragen 18 in Richtung Kapselinneres zurückversetzt, so dass die Reinigungskapsel 10 an ihrer Extraktionsseite eine trichterförmige Vertiefung 20 mit planem Boden bildet.

Eine schlitzförmige Reinigungsöffnung 22 erstreckt sich in einem Grenzbereich zwischen dem umlaufenden Kragen 18 und einer der Mantelwände 16 über zumindest einen Großteil der Breite der Reinigungskapsel 10 und bildet einen Durchgang zwischen Kragen 18 und Mantelwand 16.

Der die Vertiefung 20 definierende und den umlaufenden Kragen 18 tragende Wandabschnitt 24 läuft ausgehend von der extraktionsseitigen Wand 14 trichterförmig leicht nach außen, so dass die Reinigungskapsel 10 ausgehend von dem umlaufenden Kragen 18 in Richtung ihrer Injektionsseite eine gewisse Verjüngung erfährt, d.h. ein injektionsseitiger Abschnitt 26 der Reinigungskapsel 10 weist einen geringeren Querschnitt auf als ein extraktionsseitiger Abschnitt 28 der Reinigungskapsel 10.

Die Abmessungen des umlaufenden Kragens 18 stimmen im Wesentlichen mit den Abmessungen eines entsprechenden umlaufenden Kragens einer für das Extraktionsgerät vorgesehenen Portionskapsel überein, damit die in die Brühkammer 30 des Extraktionsgeräts eingesetzte Reinigungskapsel 10 sicher in der Brühkammer 30 gehalten ist und nach Beendigung eines Reinigungsvorgangs zuverlässig aus dieser ausgeworfen werden kann. Die in das Extraktionsgerät eingesetzte Reinigungskapsel 10 ist in Fig. 2 dargestellt.

Das Extraktionsgerät umfasst eine Injektionseinrichtung 32 zum Einleiten einer Brühflüssigkeit, z.B. Wasser, in die Brühkammer 30 sowie eine Extraktionseinrichtung 34 zum Ausleiten von Flüssigkeit aus der Brühkammer 30. Die Brühkammer 30 ist durch die Injektionseinrichtung 32 und die Extraktionseinrichtung 34 begrenzt.

Die Injektionseinrichtung 32 weist mehrere Injektionsdorne 36 auf, welche die Reinigungskapsel 10 injektionsseitig anstechen, um eine Einleitung von Brühflüssigkeit in das Kapselinnere und somit eine Vermischung der Brühflüssigkeit mit dem in der Reinigungskapsel 10 enthaltenen Reinigungs- und/oder Entkalkungsmittel zur Bildung einer Reinigungsflüssigkeit zu ermöglichen.

Die Extraktionseinrichtung 34 weist mehrere Extraktionsdorne 38 auf, welche dazu dienen, eine in die Brühkammer 30 eingesetzte Portionskapsel extraktionsseitig anzustechen, um während eines Brühvorgangs das Extraktionsprodukt aus der Portionskapsel auszuleiten. Bei der Reinigungskapsel 10 hingegen ist die extraktionsseitige Wand 14 durch die Vertiefung 20 soweit zurückversetzt, dass die Extraktionsdorne 38 nicht mit der extraktionsseitigen Wand 14 in Kontakt gelangen. Die Vertiefung 20 ist mit anderen Worten so tief ausgebildet, dass die Reinigungskapsel 10 anders als eine Portionskapsel extraktionsseitig nicht angestochen wird, d.h. nicht mit Ausleitöffnungen für die Reinigungsflüssigkeit versehen wird.

In der Brühkammer 30 ist ferner eine umlaufende Dichtlippe 40 angeordnet, die so dimensioniert ist, dass sie an einer in die Brühkammer 30 eingesetzten Portionskapsel ringsherum dichtend anliegt, um dadurch einen injektionsseitigen Teil der Brühkammer 30 gegenüber einem extraktionsseitigen Teil der Brühkammer 30 abzudichten und während eines regulären Brühvorgangs eine Strömung von Brühflüssigkeit außen an der Portionskapsel vorbei zu verhindern. Im Unterschied zu einer Portionskapsel besitzt die Reinigungskapsel 10 jedoch einen verjüngten extraktionsseitigen Abschnitt 28, welcher derart dimensioniert ist, dass der Außenquerschnitt der Reinigungskapsel 10 im Bereich der Dichtlippe 40 kleiner ist als ein Innenquerschnitt der Dichtlippe 40, so dass zwischen Dichtlippe 40 und Reinigungskapsel 10 ein umlaufender Ringspalt gebildet ist, durch den Reinigungsflüssigkeit strömen kann.

Zur Halterung der Reinigungskapsel 10 in der Brühkammer 30 greift der umlaufende Kragen 18 in eine umlaufende Ringnut 42 ein, welche in einer die Brühkammer 30 begrenzenden Wand vorgesehen ist und normalerweise zur Halterung von in die Brühkammer 30 eingesetzten Portionskapseln dient.

Zur Reinigung der Brühkammer 30 wird die Reinigungskapsel 10 wie eine Portionskapsel in die Brühkammer 30 eingesetzt, wobei darauf zu achten ist, dass die schlitzförmige Reinigungsöffnung 22 der Reinigungskapsel 10 oben liegt. Nach Verschließen der Brühkammer 30 wird ein Brühvorgang gestartet, so dass durch die Injektionseinrichtung 32 Brühflüssigkeit in die Brühkammer 30 eingeleitet wird. Die Brühflüssigkeit dringt durch die durch die Injektionsdorne 36 in die injektionsseitige Wand 12 gestochenen Injektionsöffnungen in das Innere der Reinigungskapsel 10 ein und vermischt sich dort mit dem in der Reinigungskapsel 10 enthaltenen Reinigungs- und/oder Entkalkungsmittel, wodurch eine Reinigungsflüssigkeit gebildet wird. Die Flüssigkeitsströmung ist durch Pfeile angedeutet.

Da die Reinigungskapsel 10 extraktionsseitig nicht angestochen wird, kann die Reinigungsflüssigkeit nur injektionsseitig wieder aus der Reinigungskapsel 10 austreten, nämlich über die durch die Injektionsdorne 36 erzeugten Injektionsöffnungen in der injektionsseitigen Wand 12.

Die aus der Reinigungskapsel 10 ausgetretene Reinigungsflüssigkeit strömt nun außen um die Reinigungskapsel 10 herum und durchspült und reinigt dabei die Brühkammer 30. Die Reinigungsflüssigkeit gelangt dabei durch den Ringspalt 42 zwischen der Dichtlippe 40 und der Reinigungskapsel 10 aus dem injektionsseitigen Teil in den extraktionsseitigen Teil der Brühkammer 30 und durch die schlitzförmige Reinigungsöffnung 22 der Reinigungskapsel 10 schließlich zu der Extraktionseinrichtung 34, mittels welcher sie dann abgeführt wird. Durch die obenliegende Reinigungsöffnung 22 ist sichergestellt, dass die Reinigungsflüssigkeit auch den oberen Teil der Brühkammer 30 wirksam durchspült und reinigt und nicht nur schwerkraftbedingt unten an der Reinigungskapsel 10 vorbeiströmt.

Nach Beendigung des Reinigungsvorgangs wird die Reinigungskapsel 10 beim Öffnen der Brühkammer 30 wie eine Portionskapsel selbsttätig ausgeworfen.

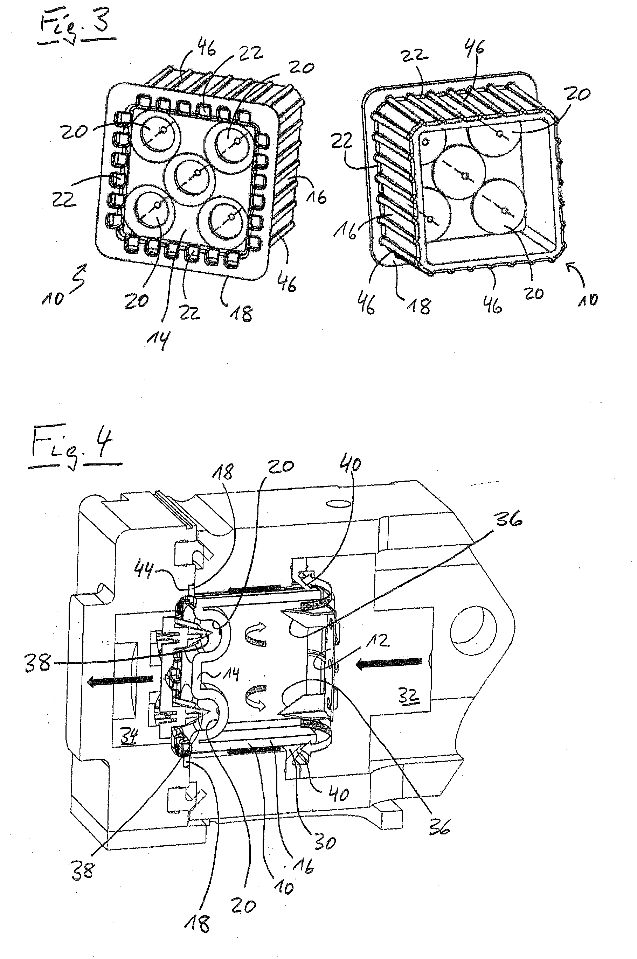

In Fig. 3 ist eine zweite Ausführungsform einer Reinigungskapsel 10 dargestellt, welche der Reinigung derselben Art von Extraktionsgerät dient, die anhand von Fig. 2 bereits beschrieben wurde.

Die Reinigungskapsel 10 weist eine annähernd kubische Grundform auf, welche der einer Portionskapsel für das Extraktionsgerät entspricht. Ähnlich wie die Reinigungskapsel 10 gemäß erster Ausführungsform lässt sich die Reinigungskapsel 10 gemäß zweiter Ausführungsform beispielsweise mittels eines Tiefzieh- oder Spritzgussverfahrens als fünfseitiger, injektionsseitig offener Polyeder-Grundkörper aus einem Kunststoffmaterial herstellen, der nach Befüllung mit einem Reinigungs- und/oder Entkalkungsmittel durch eine Siegelfolie verschlossen wird, die eine (hier transparent dargestellte) injektionsseitige Wand 12 der Reinigungskapsel 10 bildet.

Des Weiteren umfasst die Reinigungskapsel 10 vier Mantelwände 16, welche die injektionsseitige Wand 12 mit einer extraktionsseitigen Wand 14 verbinden. Die Mantelwände 16 sind jeweils plan ausgebildet und an ihrer Außenseite mit einer Vielzahl von über die jeweilige Mantelwand 16 gleich verteilt angeordneten Rippen 46 versehen, die sich parallel zueinander von der injektionsseitigen Wand 12 zu der extraktionsseitigen Wand 14 erstrecken, und zwar rechtwinklig zu diesen.

Die extraktionsseitige Wand 14 schließt bündig mit den Mantelwänden 16 ab und geht in einen seitlich vorspringenden, umlaufenden Kragen 18 über, an den die Rippen 46 angrenzen. Entlang des umlaufenden Kragens 18 sind eine Vielzahl von Reinigungsöffnungen 22 in dem umlaufenden Kragen 18 ausgebildet, und zwar in einem Grenzbereich zu den Mantelwänden 16 jeweils zwischen zwei Rippen 46.

Anders als bei der ersten Ausführungsform ist die extraktionsseitige Wand 14 hier nicht zurückversetzt. Statt dessen sind in der extraktionsseitigen Wand 14 mehrere etwa halbkugelförmige Vertiefungen 20 ausgebildet, deren Lage, Weite und Tiefe an die Lage und Abmessung der Extraktionsdorne 38 der Extraktionseinrichtung 34 des Extraktionsgeräts angepasst sind, so dass ein extraktionsseitiges Anstechen der in das Extraktionsgerät eingesetzten Reinigungskapsel 10 vermieden wird.

Zur Reinigung der Brühkammer 30 des Extraktionsgeräts wird die Reinigungskapsel 10 wie eine Portionskapsel in die Brühkammer 30 derart eingesetzt, dass der umlaufende Kragen 18 in die Ringnut 44 eingreift (Fig. 4). Die Extraktionsdorne 38 ragen dabei in die Vertiefungen 20 der extraktionsseitigen Wand 14 hinein, ohne die Wand 14 dabei zu berühren, geschweige denn anzustechen.

Da die Reinigungskapsel 10 gemäß zweiter Ausführungsform - anders als die Reinigungskapsel 10 gemäß erster Ausführungsform - keinen verjüngten injektionsseitigen Abschnitt 26 aufweist, sondern von ihrer Grundform her einer normalen Portionskapsel entspricht, liegt die in der Brühkammer 30 angeordnete Dichtlippe 40 wie bei einer normalen Portionskapsel ringsum an den Mantelwänden 16 an, ohne dabei jedoch vollständig abzudichten, da die Dichtlippe 40 durch die an den Mantelwänden 16 ausgebildeten Rippen 46 zumindest bereichsweise leicht angehoben wird.

Wird nach dem Verschließen der Brühkammer 30 ein Brühvorgang gestartet, strömt durch die Injektionseinrichtung 32 zugeführte Brühflüssigkeit durch Öffnungen, die durch die Injektionsdorne 36 in die injektionsseitige Wand 12 der Reinigungskapsel 12 gestochen werden, in das Innere der Reinigungskapsel 10, um sich dort mit dem in der Reinigungskapsel 10 enthaltenen Reinigungs- und/oder Entkalkungsmittel zu einer Reinigungsflüssigkeit zu vermischen. Da die Reinigungskapsel 10 extraktionsseitig keine Austrittsöffnungen aufweist, kann die Reinigungsflüssigkeit nur durch die in die injektionsseitige Wand 12 gestochenen Öffnungen wieder aus der Reinigungskapsel 10 austreten. Die ausgetretene Reinigungsflüssigkeit umspült die Reinigungskapsel 10 und reinigt auf diese Weise die Brühkammer 30, wobei die Reinigungsflüssigkeit an den Rippen 46 entlang unter der Dichtlippe 40 hindurch und danach durch die in dem umlaufenden Kragen 18 ausgebildeten Reinigungsöffnungen 22 zu der Extraktionseinrichtung 34 strömen kann und schließlich durch diese abgeführt wird.

Da die Reinigungsöffnungen 22 entlang des gesamten umlaufenden Kragens 18 angeordnet sind, hat diese zweite Ausführungsform der Reinigungskapsel 10 gegenüber der ersten Ausführungsform den Vorteil, dass beim Einsetzen der Reinigungskapsel 10 in die Brühkammer 30 kein "oben" und "unten" zu beachten ist, d.h. die Reinigungskapsel 10 kann mit beliebiger Orientierung eingesetzt werden.

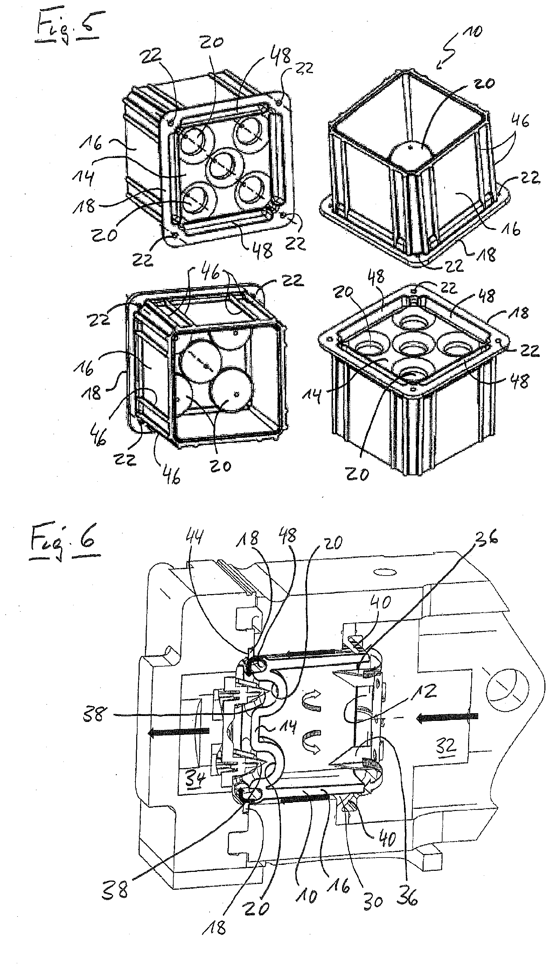

In Fig. 5 ist eine Reinigungskapsel 10 gemäß einer dritten Ausführungsform dargestellt, welche der zweiten Ausführungsform weitgehend ähnlich ist.

Die Reinigungskapsel 10 gemäß dritter Ausführungsform unterscheidet sich von der zweiten Ausführungsform zum einen darin, dass sie anstelle von einer Vielzahl von entlang der Länge des umlaufenden Kragens 18 angeordneten Reinigungsöffnungen 22 lediglich vier Reinigungsöffnungen 22 aufweist, die jeweils in einem Eckbereich des umlaufenden Kragens 18 angeordnet sind.

Zum anderen sind die Mantelwände 16 der Reinigungskapsel 10 gemäß dritter Ausführungsform anders als bei der zweiten Ausführungsform nicht jeweils mit einer Vielzahl von über die Mantelwand 16 gleichverteilt angeordneten Rippen 46 versehen. Stattdessen sind an jeder Mantelwand 16 lediglich zwei Paare von Rippen 46 ausgebildet, wobei sich die Rippen 46 jedes Rippenpaares bei dieser Ausführungsform entlang eines Eckbereichs, in welchem die Mantelwand 16 in eine benachbarte Mantelwand 16 übergeht, von der injektionsseitigen Wand 12 bis an den umlaufenden Kragen 18 erstrecken. Auch bei dieser Ausführungsform dienen die Rippen 46 einerseits dazu, die Dichtlippe 40 des Extraktionsgeräts, welche an den Mantelwänden 16 dichtend anliegt, wenn die Reinigungskapsel 10 in die Brühkammer 30 des Extraktionsgeräts eingesetzt ist, bereichsweise anzuheben und auf diese Weise einen Durchgang für die außen an der Reinigungskapsel 10 entlangströmende und die Brühkammer 30 spülende Reinigungsflüssigkeit zu schaffen, und andererseits dazu, eine gewisse Kanalisation der Reinigungsflüssigkeit in Richtung der in den Eckbereichen des umlaufenden Kragens 18 angeordneten Reinigungsöffnungen 22 bereitzustellen (Fig. 6).

Im weiteren Unterschied zur zweiten Ausführungsform sind bei der Reinigungskapsel 10 gemäß dritter Ausführungsform extraktionsseitig vier gerade Längsnuten 48 ausgebildet, die sich dort, wo die extraktionsseitige Wand 14 in den umlaufenden Kragen 18 übergeht, parallel zu der jeweils angrenzenden Mantelwand 16 erstrecken. Die Längsnuten 48 sorgen für eine erhöhte Flexibilität des umlaufenden Kragens 18, welche dazu beiträgt, dass sich die in das Extraktionsgerät eingesetzte Reinigungskapsel 10 nach Vollendung eines Reinigungsvorgangs leichter aus der Brühkammer 30 auswerfen lässt.

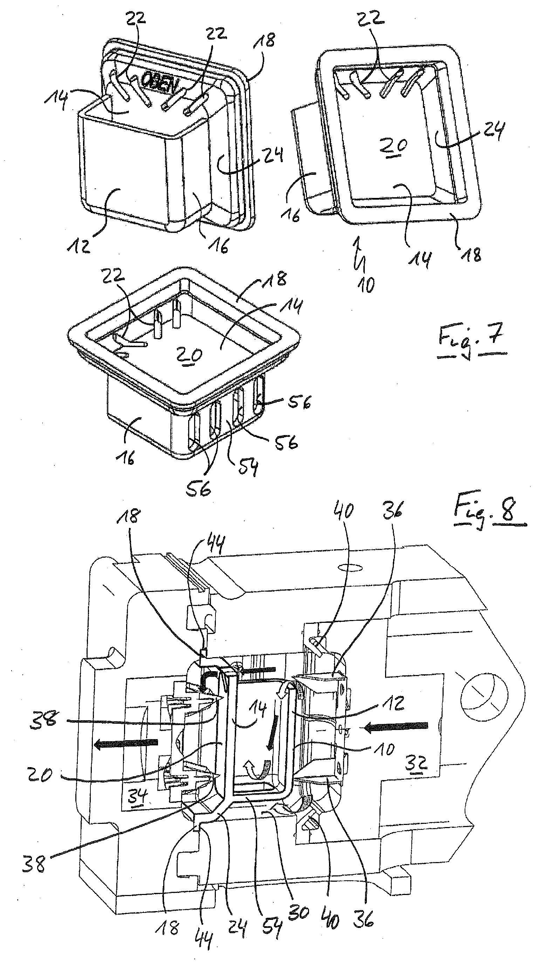

In Fig. 7 ist eine Reinigungskapsel 10 gemäß einer vierten Ausführungsform dargestellt, welche ebenfalls zur Reinigung und/oder Entkalkung des bereits beschriebenen Extraktionsgeräts dient und dabei den Vorteil besitzt, dass sie mehrfach verwendet werden kann.

Extraktionsseitig ist die Reinigungskapsel 10 gemäß vierter Ausführungsform wie die erste Ausführungsform ausgebildet, d.h. sie besitzt ebenfalls eine gegenüber dem umlaufenden Kragen 18 zurückversetzte extraktionsseitige Wand 14, durch welche eine extraktionsseitige Vertiefung 20 geschaffen wird, in welcher die Extraktionsdorne 36 des Extraktionsgeräts kontaktfrei aufgenommen werden, wenn die Reinigungskapsel 10 in das Extraktionsgerät eingesetzt ist (Fig. 8).

Im Gegensatz zu den voranstehend beschriebenen Ausführungsformen weist die Reinigungskapsel 10 gemäß vierter Ausführungsform jedoch keinen abgeschlossenen Kapselinnenraum auf, in welchem ein Reinigungs- und/oder Entkalkungsmittel enthalten ist. Stattdessen ist die Reinigungskapsel 10 injektionsseitig in Form eines nach oben offenen Körbchens 52 ausgebildet, in welches ein Reinigungs- und/oder Entkalkungsmittel eingebracht werden kann, z.B. in Form einer Tablette.

Während eines Reinigungsvorgangs kann in die Brühkammer 30 eingeleitete Brühflüssigkeit von oben in das Körbchen 52 eindringen, um sich zur Bildung einer Reinigungsflüssigkeit mit dem in dem Körbchen 52 enthaltenen Reinigungs- und/oder Entkalkungsmittel zu vermischen. Zur besseren Vermischung von Brühflüssigkeit und Reinigungs- und/oder Entkalkungsmittel sind zusätzlich Öffnungen 56 in einem Boden 54 des Körbchens 52 vorgesehen, durch welche die Brühflüssigkeit auch von unten in das Körbchen 52 eindringen kann. Entsprechend kann die Reinigungsflüssigkeit nach oben und unten aus dem Körbchen 52 austreten.

Um sicherzustellen, dass auch ein oberer Teil der Brühkammer 30 wirksam von Reinigungsflüssigkeit durchspült und gereinigt wird, sind oberhalb des Körbchens 52 mehrere Reinigungsöffnungen 22 in einer die extraktionsseitige Vertiefung 20 begrenzenden Wand der Reinigungskapsel 10 ausgebildet, durch welche die Reinigungsflüssigkeit aus dem injektionsseitigen Teil der Brühkammer 30 zu der Extraktionseinrichtung 34 strömen kann, um von dieser abgeführt zu werden. Wie insbesondere Fig. 8 zeigt, ist die Länge der Reinigungskapsel 10 von Injektionsseite zur Extraktionsseite gesehen so gering gewählt, dass die injektionsseitige Wand 12 der in die Brühkammer 30 eingesetzten Reinigungskapsel 10 mit den Injektionsdornen 36 der Injektionseinrichtung 32 nicht in Kontakt gerät und anders als bei den vorherigen Ausführungsformen nicht angestochen wird.

### Bezugszeichenliste

- 10: Reinigungskapsel
- 12: injektionsseitige Wand
- 14: extraktionsseitige Wand
- 16: Mantelwand
- 18: umlaufender Kragen
- 20: Vertiefung
- 22: Reinigungsöffnung
- 24: Wandabschnitt
- 26: injektionsseitiger Abschnitt
- 28: extraktionsseitiger Abschnitt
- 30: Brühkammer
- 32: Injektionseinrichtung
- 34: Extraktionseinrichtung
- 36: Injektionsdorn
- 38: Extraktionsdorn
- 40: Dichtlippe
- 42: Ringspalt
- 44: Ringnut
- 46: Rippe
- 48: Längsnut
- 52: Körbchen
- 54: Boden
- 56: Öffnung

## Patentansprüche

1. Ein Reinigungs- und/oder Entkalkungsmittel enthaltende Reinigungskapsel (10) für ein Extraktionsgerät, welches zur Zubereitung eines Brüherzeugnisses aus einem in einer Portionskapsel enthaltenen Extraktionsgut vorgesehen ist und welches eine Injektionseinrichtung zum Einleiten einer Brühflüssigkeit in die Portionskapsel und eine Extraktionseinrichtung (34) zum Ausleiten eines Extraktionsprodukts aus der Portionskapsel umfasst, wobei die Injektionseinrichtung (32) und die Extraktionseinrichtung (34) eine Brühkammer (30) definieren, in welche die Portionskapsel einsetzbar ist, und wobei die Injektionseinrichtung (32) wenigstens einen Injektionsdorn (36) und die Extraktionseinrichtung (34) wenigstens einen Extraktionsdorn (38) zum Anstechen der in die Brühkammer (30) eingesetzten Portionskapsel aufweist,
**dadurch gekennzeichnet, dass**
die Reinigungskapsel (10) in die Brühkammer (30) einsetzbar ist und wenigstens eine Vertiefung (20) einer extraktionsseitigen Kapselwand (14) umfasst, wodurch ein extraktionsseitiges Anstechen der Reinigungskapsel (10) in der Brühkammer (30) durch den Extraktionsdorn (38) verhinderbar ist, und wodurch die Reinigungskapsel derart ausgebildet ist, dass durch die Injektionseinrichtung (32) injektionsseitig in die Reinigungskapsel (10) eingeleitete Brühflüssigkeit injektionsseitig wieder aus der Reinigungskapsel (10) austritt und außen an der Reinigungskapsel (10) vorbei zu der Extraktionseinrichtung (34) strömt.

2. Reinigungskapsel (10) nach Anspruch 1,
**dadurch gekennzeichnet, dass**
ein umlaufender Kragen (18) der Reinigungskapsel (10) wenigstens eine Durchgangsöffnung (22) für außen an der Reinigungskapsel (10) vorbeiströmende Flüssigkeit aufweist.

3. Reinigungskapsel (10) nach Anspruch 2,
**dadurch gekennzeichnet, dass**
eine Vielzahl von Durchgangsöffnungen (22) über die Länge des Kragens (18) im Wesentlichen gleich verteilt angeordnet sind.

4. Reinigungskapsel (10) nach zumindest einem der vorherigen Ansprüche,
**dadurch gekennzeichnet, dass**
die Reinigungskapsel (10) eine im Wesentlichen kubische oder quaderförmige Grundform aufweist.

5. Reinigungskapsel (10) nach zumindest einem der vorherigen Ansprüche,
**dadurch gekennzeichnet, dass**
ein umlaufender Kragen (18) der Reinigungskapsel (10) nur an einer Seite der Reinigungskapsel (10) eine Durchgangsöffnung (22) für außen an der Reinigungskapsel (10) vorbeiströmende Flüssigkeit aufweist, welche insbesondere schlitzförmig ausgebildet ist.

6. Reinigungskapsel (10) nach zumindest einem der vorherigen Ansprüche,
**dadurch gekennzeichnet, dass**
ein umlaufender Kragen (18) der Reinigungskapsel (10) in Eckbereichen des Kragens (18) jeweils eine Durchgangsöffnung (22) für außen an der Reinigungskapsel (10) vorbeiströmende Flüssigkeit aufweist.

7. Reinigungskapsel (10) nach zumindest einem der vorherigen Ansprüche,
**dadurch gekennzeichnet, dass** mindestens eine Mantelwand (16) der Reinigungskapsel (10) mit wenigstens einer außenliegenden Rippe (46) versehen ist, die sich insbesondere rechtwinklig zu einer extraktionsseitigen Kapselwand erstreckt.

8. Reinigungskapsel (10) nach Anspruch 7,
**dadurch gekennzeichnet, dass**
eine Vielzahl von Rippen (46) über die Mantelwand (16) im Wesentlichen gleich verteilt angeordnet sind.

9. Reinigungskapsel (10) nach Anspruch 7,
**dadurch gekennzeichnet, dass**
Rippen (46) nur in Eckbereichen vorgesehen sind, in welchen plane Mantelwände (16) aneinander angrenzen.

10. Reinigungskapsel (10) nach zumindest einem der vorherigen Ansprüche,
**dadurch gekennzeichnet, dass**
zumindest eine außenliegende Rippe (46) an einen seitlich umlaufenden Kragen (18) der Reinigungskapsel (10) angrenzt oder zu diesem beabstandet ist.

11. Reinigungskapsel (10) nach zumindest einem der vorherigen Ansprüche,
**dadurch gekennzeichnet, dass**
sie, insbesondere durch Tiefziehen oder Spritzgießen, als fünfseitiger, extraktionsseitig offener Polyeder-Grundkörper hergestellt ist, der nach Befüllung mit dem Reinigungs- und/oder Entkalkungsmittel durch eine Siegelfolie verschlossen wird.

12. System zur Zubereitung eines Brüherzeugnisses mit
einem Extraktionsgerät, welches zur Zubereitung eines Brüherzeugnisses aus einem in einer Portionskapsel enthaltenen Extraktionsgut vorgesehen ist und welches eine Injektionseinrichtung (32) zum Einleiten einer Brühflüssigkeit in die Portionskapsel und eine Extraktionseinrichtung (34) zum Ausleiten eines Extraktionsprodukts aus der Portionskapsel umfasst, wobei die Injektionseinrichtung (32) und die Extraktionseinrichtung (34) eine Brühkammer (30) definieren, in welche die Portionskapsel einsetzbar ist, und wobei die Injektionseinrichtung (32) wenigstens einen Injektionsdorn (36) und die Extraktionseinrichtung (34) wenigstens einen Extraktionsdorn (38) zum Anstechen der in die Brühkammer (30) eingesetzten Portionskapsel aufweist, und
einer ein Reinigungs- und/oder Entkalkungsmittel enthaltenden Reinigungskapsel (10) nach zumindest einem der vorherigen Ansprüche, wobei die Vertiefung (20) so an den Extraktionsdorn angepasst ist, dass ein extraktionsseitiges Anstechen der Reinigungskapsel (10) in der Brühkammer (30) verhindert wird, wodurch durch die Injektionseinrichtung (32) injektionsseitig in die Reinigungskapsel (10) eingeleitete Brühflüssigkeit injektionsseitig wieder aus der Reinigungskapsel (10) austritt und außen an der Reinigungskapsel (10) vorbei zu der Extraktionseinrichtung (34) strömt.

## Claims

1. A cleaning capsule (10) for an extraction appliance, said cleaning capsule comprising cleaning and/or descaling agent and said extraction appliance being provided for preparing a brewed product from an extraction material contained in a portion capsule and comprising an injection device for introducing a brewing fluid into the portion capsule and extraction device (34) for discharging an extraction product out of the portion capsule, wherein the injection device (32) and the extraction device (34) define a brewing chamber (30), into which the portion capsule can be inserted, and wherein the injection device (32) comprises at least one injection spike (36) and the extraction device (34) at least one extraction spike (38), for piercing the portion capsule which is inserted into the brewing chamber (30),
**characterised in that**
the cleaning capsule (10) is insertable into the brewing chamber (30) and comprises at least one deepening (20) of an extraction-side capsule wall (14), by which means an extraction-side piercing of the cleaning capsule (10) in the brewing changer (30) by the extraction spike (38) is preventable, and by which means the cleaning capsule is designed in a manner such that brewing fluid which is introduced by the injection device (32) into the cleaning capsule (10) at the injection side exits out of the cleaning capsule (10) again at the injection side and flows outwards past the cleaning capsule (10) to the extraction device (34).

2. A cleaning capsule (10) according to claim 1,
**characterised in that**
a peripheral collar (18) of the cleaning capsule (10) comprises at least one through-opening (22) for fluid which flows outwards past the cleaning capsule (10).

3. A cleaning capsule (10) according to claim 2,
**characterised in that**
a multitude of through-openings (22) are arranged distributed essentially equally over the length of the collar (18).

4. A cleaning capsule (10) according to at least one of the preceding claims,
**characterised in that**
the cleaning capsule (10) has an essentially cubic or cuboid basic shape.

5. A cleaning capsule (10) according to at least one of the preceding claims,
**characterised in that**
a peripheral collar (18) of the cleaning capsule (10) comprises a through-opening (22) at only one side of the cleaning capsule (10), said through opening being for fluid which flows outwards past the cleaning capsule (10) and being designed in particular in a slot-like manner.

6. A cleaning capsule (10) according to at least one of the preceding claims,
**characterised in that**
a peripheral collar (18) of the cleaning capsule (10) in corner regions of the collar (18) in each case comprises a through-opening (22) for fluid which flows outwards past the cleaning capsule (10).

7. A cleaning capsule (10) according to at least one of the preceding claims,
**characterised in that**
at least one lateral wall (16) of the cleaning capsule (10) is provided with at least one outer-lying rib (46) which in particular extends at right angles to an extraction-side capsule wall.

8. A cleaning capsule (10) according to claim 7,
**characterised in that**
a multitude of ribs (46) are arranged distributed essentially equally over the lateral wall (16).

9. A cleaning capsule (10) according to claim 7,
**characterised in that**
ribs (46) are only provided in corner regions, in which plane lateral walls (16) are adjacent to one another.

10. A cleaning capsule (10) according to at least one of the preceding claims,
**characterised in that**
at least one outer-lying rib (46) is adjacent to a laterally peripheral collar (18) of the cleaning capsule (10) or is distanced to this.

11. A cleaning capsule (10) according to at least one of the preceding claims,
**characterised in that**
it is manufactured in particular by way of deep-drawing or injection moulding, as a five-sided polyhedron basic body which is open at the extraction side and which after filling with the cleaning and/or descaling agent is closed by a sealing foil.

12. A system for preparing a brewed product with
an extraction appliance which is provided for preparation of a brewed product from an extraction material contained in a portion capsule and which comprises an injection device (32) for introducing a brewing fluid into the portion capsule and an extraction device (34) for discharging an extraction product out of the portion capsule, wherein the injection device (32) and the extraction device (34) define a brewing chamber (30), into which the portion capsule can be inserted, and wherein the injection device (32) comprises at least one injection spike (36) and the extraction device (34) at least one extraction spike (38), for piercing the portion capsule which is inserted into the brewing chamber (30) and
with a cleaning capsule (10) according to at least one of the preceding claims, said cleaning capsule containing a cleaning and/or descaling agent, wherein the deepening (20) is adapted to the extraction spike such that an extraction-side piercing of the cleaning capsule (10) in the brewing chamber (30) is prevented, by which means brewing fluid which is introduced by the injection device (32) into the cleaning capsule (10) at the injection side exits out of the cleaning capsule (10) again at the injection side and flows outwards past the cleaning capsule (10) to the extraction device (34).

## Revendications

1. Capsule de nettoyage (10), contenant un agent de nettoyage et/ou de décalcification, pour un appareil d'extraction qui est prévu pour préparer un produit d'infusion à partir d'un produit d'extraction contenu dans une capsule individuelle, et qui comprend un dispositif d'injection pour introduire un liquide d'infusion dans la capsule individuelle et un dispositif d'extraction (34) pour évacuer un produit d'extraction hors de la capsule individuelle, le dispositif d'injection (32) et le dispositif d'extraction (34) définissant une chambre d'infusion (30) dans laquelle la capsule individuelle peut être introduite et le dispositif d'injection (32) présentant au moins une pointe d'injection (36) et le dispositif d'extraction (34) présentant au moins une pointe d'extraction (38) pour percer la capsule individuelle introduite dans la chambre d'infusion (30),
**caractérisée en ce que**
la capsule de nettoyage (10) peut être introduite dans la chambre d'infusion (30) et comprend au moins un renfoncement (20) d'une paroi de capsule (14) côté extraction, de sorte qu'un perçage côté extraction de la capsule de nettoyage (10) dans la chambre d'infusion (30) par la pointe d'extraction (38) puisse être empêché,
et de sorte que la capsule de nettoyage soit réalisée de telle sorte que du liquide d'infusion introduit du côté injection dans la capsule de nettoyage (10) par le dispositif d'injection (32) sorte à nouveau du côté injection hors de la capsule de nettoyage (10) et s'écoule à l'extérieur devant la capsule de nettoyage (10) jusqu'au dispositif d'extraction (34).

2. Capsule de nettoyage (10) selon la revendication 1,
**caractérisée en ce**
**qu'**une collerette périphérique (18) de la capsule de nettoyage (10) présente au moins une ouverture de passage (22) pour le liquide s'écoulant à l'extérieur devant la capsule de nettoyage (10).

3. Capsule de nettoyage (10) selon la revendication 2,
**caractérisée en ce**
**qu'**une pluralité d'ouvertures de passage (22) sont disposées de manière répartie essentiellement uniformément sur la longueur de la collerette (18).

4. Capsule de nettoyage (10) selon au moins l'une des revendications précédentes,
**caractérisée en ce que**
la capsule nettoyage (10) présente une forme de base essentiellement cubique ou parallélépipédique.

5. Capsule de nettoyage (10) selon au moins l'une des revendications précédentes,
**caractérisée en ce**
**qu'**une collerette périphérique (18) de la capsule de nettoyage (10) présente seulement d'un côté de la capsule de nettoyage (10) une ouverture de passage (22) pour le liquide s'écoulant à l'extérieur devant la capsule de nettoyage (10), qui est réalisée notamment en forme de fente.

6. Capsule de nettoyage (10) selon au moins l'une des revendications précédentes,
**caractérisée en ce**
**qu'**une collerette périphérique (18) de la capsule de nettoyage (10) présente dans les régions de coin de la collerette (18) une ouverture de passage respective (22) pour le liquide s'écoulant à l'extérieur devant la capsule de nettoyage (10).

7. Capsule de nettoyage (10) selon au moins l'une des revendications précédentes,
**caractérisée en ce**
**qu'**au moins une paroi d'enveloppe (16) de la capsule de nettoyage (10) est pourvue d'au moins une nervure (46) située à l'extérieur, qui s'étend notamment à angle droit par rapport à une paroi de capsule côté extraction.

8. Capsule de nettoyage (10) selon la revendication 7,
**caractérisée en ce**
**qu'**une pluralité de nervures (46) sont disposées de manière répartie essentiellement uniformément sur la paroi d'enveloppe (16).

9. Capsule de nettoyage (10) selon la revendication 7,
**caractérisée en ce que**
des nervures (46) sont prévues seulement dans les régions de coin dans lesquelles des parois d'enveloppe planes (16) sont adjacentes l'une à l'autre.

10. Capsule de nettoyage (10) selon au moins l'une des revendications précédentes,
**caractérisée en ce**
**qu'**au moins une nervure (46) située à l'extérieur est adjacente à une collerette (18) de la capsule de nettoyage (10) s'étendant latéralement sur la périphérie ou est espacée de celle-ci.

11. Capsule de nettoyage (10) selon au moins l'une des revendications précédentes,
**caractérisée en ce**
**qu'**elle est fabriquée, notamment par emboutissage profond ou par moulage par injection, sous la forme d'un corps de base polyédrique à cinq côtés, ouvert du côté de l'extraction, qui est fermé par un film de scellage après le remplissage avec l'agent de nettoyage et/ou de décalcification.

12. Système pour la préparation d'un produit d'infusion comprenant
un appareil d'extraction qui est prévu pour préparer un produit d'infusion à partir d'un produit d'extraction contenu dans une capsule individuelle, et qui comprend un dispositif d'injection (32) pour introduire un liquide d'infusion dans la capsule individuelle et un dispositif d'extraction (34) pour évacuer un produit d'extraction hors de la capsule individuelle, le dispositif d'injection (32) et le dispositif d'extraction (34) définissant une chambre d'infusion (30) dans laquelle la capsule individuelle peut être introduite et le dispositif d'injection (32) présentant au moins une pointe d'injection (36) et le dispositif d'extraction (34) présentant au moins une pointe d'extraction (38) pour percer la capsule individuelle introduite dans la chambre d'infusion (30), et
une capsule de nettoyage (10) contenant un agent de nettoyage et/ou de décalcification selon moins l'une quelconque des revendications précédentes, le renfoncement (20) étant adapté à la pointe d'extraction de telle sorte qu'un perçage côté extraction de la capsule de nettoyage (10) dans la chambre d'infusion (30) soit empêché de telle sorte que du liquide d'infusion introduit du côté injection dans la capsule de nettoyage (10) par le dispositif d'injection (32) sorte à nouveau du côté injection hors de la capsule de nettoyage (10) et s'écoule à l'extérieur devant la capsule de nettoyage (10) jusqu'au dispositif d'extraction (34).
